# EUROPEAN PATENT APPLICATION

(11) **EP 1 110 816 A2**
(43) Date of publication of application: **27.06.2001**
(21) Application number: 00124583.6
(22) Date of filing: 10.11.2000
(51) Int. Cl.: B60Q 1/26, H05B 33/00, H05B 33/02

(54) **Electroluminescent vehicle lamp**

(30) Priority: 22.12.1999 US 470305
(71) Applicant: OSRAM SYLVANIA INC., Danvers, MA 01923 (US)
(72) Inventor: Chipalkatti, Makarand H., Lexington, Massachusetts 02420 (US); Laski, Joseph J., Stoneham, Massachusetts 02180 (US); Meyer, William E., Lincoln, Massachusetts 01773 (US); Trickett, Elizabeth A., Gloucester, Massachusetts 01930-4228 (US)
(74) Representative: Pokorny, Gerd

(57) **Abstract**

An electroluminescent vehicle lamp made with a lens plate, a back plate, electroluminescent sheet, first electrical connector, second electrical connector is disclosed. The lamp has decreased volume and weight due to its small thickness. The electroluminescent vehicle lamp provides a vehicle signal lamp with a small thickness that is otherwise conformal with the surface of a vehicle. A particular advantage of the lamp structure is that the vehicle body needs only minimal forming to accommodate the positioning of the lamp, and little interior space in the vehicle is required. Two or more color regions can be formed in one housing. Two different states of appearance such that the device can exhibit a bright operating color (red, yellow, etc.) and yet blend in with the rest of the vehicle exterior in the non-operating mode. The EL lamp is expected to be easy to manufacture, for example by painting on (or spin or dipcoating) the luminescent layer, offer large light emitting areas, and be capable of being flexible, patternable and consume relatively low power. A variety of color choices are possible including the dynamic changing of color. The lamp can be applied to other areas, such as those applications where thick and thin film inorganic electroluminescent devices are used.

## Description

### 1. Technical Field

The invention relates to electric lamps and particularly to vehicle lamps. More particularly the invention is concerned with electroluminescent vehicle lamps.

### 2. Background Art

Incandescent and discharge lamps with enclosing envelopes are generally spherical or tubular with sometimes substantial diameters. These lamps also use relatively intense light sources that need lenses or reflectors to properly spread the generated light. These lamps usually then have mounting hardware to hold and point the lamp. The whole assembly, the lamp, lens, reflector and mounting hardware can take up a substantial volume. To avoid projecting into the surrounding air stream, vehicle makers inset the lamp assembly in the vehicle through a hole in the vehicle hull, meaning valuable interior space is taken. The hole requires additional cutting and shaping of the hull. The hole may also weaken the hull, or leak water to the interior. There is then a need for a vehicle lamp with a minimal volume, requiring minimal shaping of the vehicle hull to accommodate the lamp.

A trend in automotive lighting design has been to blend the lamp into the vehicle, not only in terms of geometry, but also terms of color. Typical exterior lamps rely on colored (red and yellow) plastic lenses to filter white incandescent light to provide the light colors specified by the Society of Automotive Engineers (SAE). As such, not only is this filtration of incandescent light highly inefficient from an energy perspective, but the non-operating (off) appearance of the lamp is still either red or yellow. There is then a need for a lighting system to function adequately in the operating mode and then revert to a non-operating appearance which blends with the color and style of the rest of the vehicle.

### Disclosure of the Invention

An electroluminescent lamp may be formed for use as an exterior vehicle lamp. The lamp comprises a light transmissive housing with an enclosed, thin sheet like cavity therein; the housing has an exterior surface forming a portion of a exterior vehicle surface. The light source is an electroluminescent sheet enclosed in the cavity; coupled by first and second electrical connectors electrically coupled to the luminescent sheet, and sealed through the housing for electrical connection on the exterior of the housing. Other than for lead connection, the exterior of the vehicle body may be formed with only a small indention.

### Brief Description of the Drawings

FIG. 1 shows a schematic cross sectional view of a preferred embodiment of an electroluminescent vehicle lamp.

FIG. 2 shows a schematic cross sectional view of a preferred lens plate.

FIG. 3 shows schematic cross sectional view of a preferred back plate.

FIG. 4 shows a schematic cross sectional view of an electroluminescent sheet.

FIG. 5 shows front view of a preferred back plate.

FIG. 6 shows a cross sectional view of an alternative embodiment of an electroluminescent vehicle lamp .

FIG. 7 shows a cross sectional view of an alternative embodiment of an electroluminescent vehicle lamp.

FIG. 8 shows a cross section of an alternative EL sheet having two separated regions of illumination.

FIG. 9 shows a cross section of an alternative EL sheet having two separated color regions of illumination.

FIG. 10 shows a cross section of an alternative EL sheet having two separated regions of illumination.

FIG. 11 shows a cross section of an alternative EL sheet having two separated regions of illumination and two associated separated color regions.

FIG. 12 shows a cross section of an alternative EL sheet decaled to the vehicle body.

FIG. 13 shows a perspective view of an automobile rear corner with an electroluminescent vehicle lamp.

FIG. 14 shows a cross sectional view of an automobile corner with an electroluminescent vehicle lamp.

### Best Mode for Carrying Out the Invention

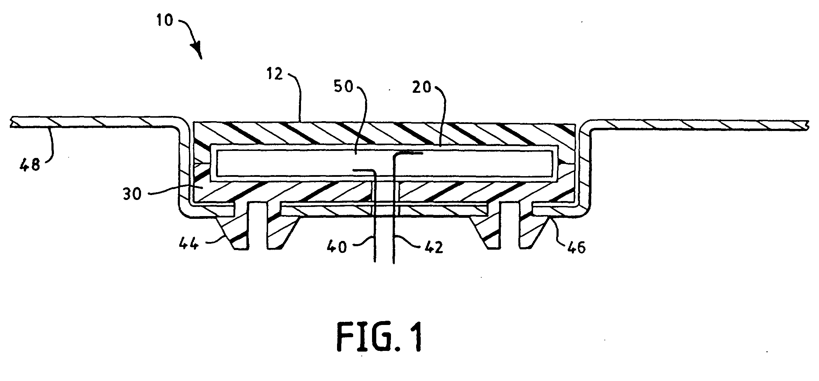

FIG. 1 shows a schematic cross sectional view of a preferred embodiment of an electroluminescent vehicle lamp 10. Like reference numbers designate like or corresponding parts throughout the drawings and specification. The electroluminescent vehicle lamp 10 may be assembled from a lens plate 12, a back plate 30, and an electroluminescent or "EL" sheet 50. The lens plate 12 is located adjacent the back plate 30 to thereby define a narrow cavity 20 between the lens plate 12 and the back plate 30, and that encloses the EL sheet 50.

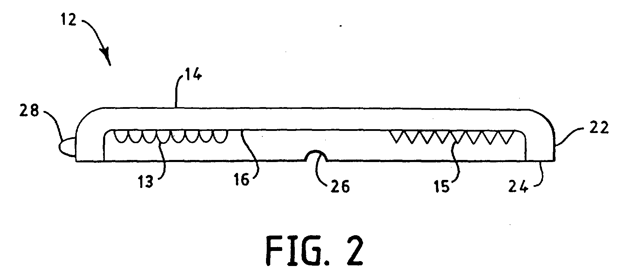

FIG. 2 shows a schematic cross sectional view of a lens plate 12. The lens plate 12 may be made out of polycarbonate or similar light transmissive material to have the general form of a thin sheet. The preferred lens plate 12 is conformal with the curved surface of the exterior of a vehicle. The lens plate 12 includes a front side 14 directed to the field to be lit. The lens plate 12 includes an interior side 16 directed to the EL sheet 50. The interior side 16 of the plate may include formed features to mate with the back plate 30, or with the EL sheet 50. The preferred interior side 16 includes a side wall 22. The side wall 22 extends around the circumference of the lens plate 12, and includes a face 24 or lip to conformally couple with the back plate 30. In the preferred embodiment, the lens plate 12 seals to the back plate 30 to form a water tight closure. The side wall 22 may additionally include mount alignment references 26 to hold or properly locate the lens plate 12 with respect to the back plate 30, and alignment references 28 to hold or properly locate the lens plate 12 with respect to the vehicle hull 48. It is expected that the lens plate 12 may include smooth surface bends, wrap around comers, abutments with other lamps, and similar exterior configurations to fit the lamp 10 with the surface styling of the exterior of a vehicle and any adjacent surface mounted hardware. The lens plate 12 may additionally include formed refractive, reflective or other known optical elements for distributing the generated light into desired patterns, or markings such as lenticules 13, cubical corner reflectors 15, fresnel lens, and similar light shaping features. A typical clear polycarbonate forward lens is usually locally about 1 or 5 millimeters thick. With additional lenticules, cubic reflector features, or similar features the local thickness may be greater. It is understood that the gross thickness depends on any curves the lamp 10 must follow along the vehicle hull 48.

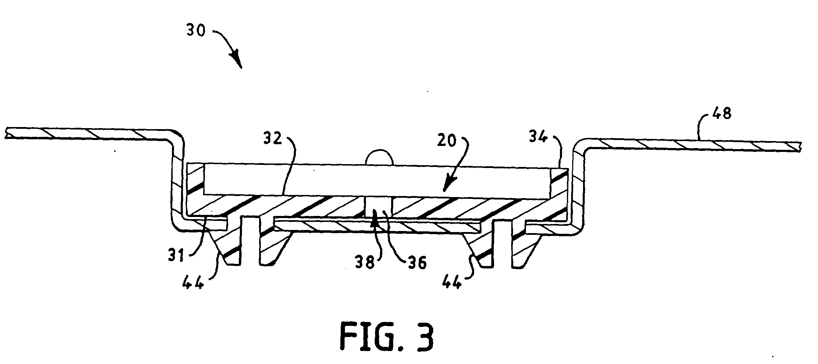

FIG. 3 shows schematic cross sectional view of a back plate 30. The back plate 30 may be made of plastic or other material to have the general form of a plate, generally conformal with the vehicle hull 48 on a vehicle side 31 facing the vehicle, and generally conformal with the lens plate 12 on a light source side 32. The back plate 30 includes a sealing face 34 extending circumferentially around the cavity region 20. The lens plate 12 is sealed along face 24 to the back plate 30 along face 34 to form the thin, sheet like cavity 20 between the lens plate 12 and the back plate 30. The depth of the cavity 20 needs to be sufficient to receive the EL sheet 50. A depth of about 1 or 2 millimeters for the EL sheet 50 with an additional tolerance of 1 millimeter would give a total cavity 20 depth of 2 or 3 millimeters. The preferred back plate 30 has a wall portion 36 defining a small through passage 38 to admit electrical connection lead wires 40, 42. Additionally positioned along back plate 30 may be one or more positioning or coupling features 44 designed to mechanically couple to corresponding coupling features 46 formed in the vehicle hull 48. The mechanical coupling of the lamp 10 to the vehicle hull 48 may take numerous forms such as molded plastic snaps, attached spring clips, threaded bolts and screw holes, latches and similar known mechanical coupling structures. For example, the back plate 30 may include one or more molded spring clips to join the lamp 10 to the vehicle hull 48 by means of mounting holes formed in the vehicle hull 48 through which the spring clips extend and thereby attach the lamp to the vehicle. The back plate 30 may also be adhesively coupled to the vehicle. A back plate 30 thickness of 1 to 5 millimeters may be used. Strengthening the back plate 30 in the region of any coupling feature 44, to provide over all rigidity, or the inclusion of positioning aligners is expected.

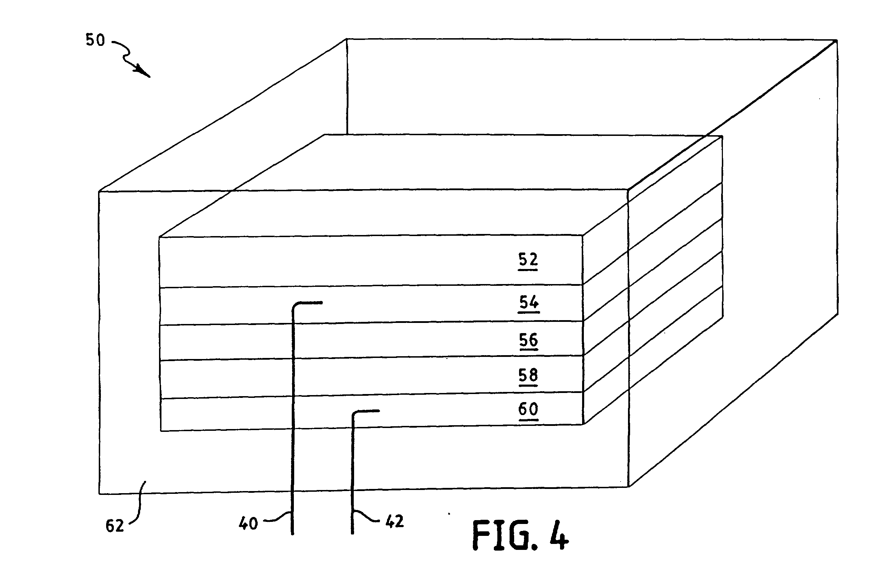

FIG. 4 shows a schematic cross sectional view of an electroluminescent ("EL") sheet 50. The EL sheet 50 may be made in several forms, but in each case, the sheet has the general form of a sheet, generally not more than a few (1 to 3) millimeters thick. The sheet may be flexible or rigid. A flexible EL sheet 50 is preferred, as it may be more easily fitted into a curved lamp assembly. EL sheet 50 materials, whether they are flexible or not can be made in various forms, such as thin or thick film panels, field emission devices, organic light emitting devices (OLED or others) and others. Various examples of thin light emitting sheets are given herein. These light emitting sheet structures shall be referred to generically hereinafter as an electroluminescent sheet or EL sheet 50 with the understanding that alternative forms may be adapted or fitted into the thin automotive format. The EL sheet 50 contains at least one electroluminescent layer sandwiched by at least a first conductive layer, such as indium tin oxide, and a second conductive layer, such as aluminum. In one preferred embodiment. the EL sheet 50 has a support layer 52, a first conductive layer 54, an electroluminescent layer 56, a dielectric layer 58, and a second conductive layer 60. The whole EL sheet 50 may also be enclosed in a protective sheath 62 that is light transmissive in at least one window area.

In another embodiment the electroluminescent layer may have charge transport layers on one or both sides of the electroluminescent layer, for example the first conductive layer 54 and the second conductive layer 60 may be directly on either side of the electroluminescent layer 56 with no intermediate dielectric layer 58.

The support layer 52 may for example be a separate transparent plastic film, such as a clear PET film upon which the remaining layers are built. The EL sheet 50 may be made by using a flexible polymer as substrate, by thermoforming an otherwise rigid substrate to a desired contour, or by using a rigid substrate such as a glass or ceramic, any of which may be light transmissive. The result is a detached EL sheet 50 as a light source. In this format the support layer 52 is the top side of the EL sheet 50 and should therefore be light transmissive.

Mass production of generic EL sheets is expected. The EL sheet is then cut, patterned or fabricated on a patterned substrate to fit the specific lamp cavity 20 shape and mate with mounting or holding features found therein. If desired, for added strength, a metal plate may be used as the substrate, in which case the metal plate may also be integrated within the second conductive layer 60 to serve as the second conductive layer, or to stiffen the surrounding conductive layer material.

Positioned adjacent the support layer 52 may be an first conductive layer 54 that is light transmissive, and preferably clear. In practice, a transparent conductor such as indium tin oxide (ITO) is often used. However, a conjugated conducting or semiconducting polymer layer such as polyphenylene vinylene (PPV) in poly methyl methacrylate (PMMA), or a polymer electron transport material such as 2-(4 -biphenylyl(-5-(4-tert-butyl-phenyl) 1,3,4-oxadiazole (PBD) may be deposited over the support layer 52 in the material region that is to illuminate. The first electrical lead 40 is coupled to the first conductive layer 54. The first lead 40 may also include a copper mesh end or similar means to provide a good contact with the first conductive layer 54. Alternatively, a thin layer of from about 50 to about 500 angstroms of a metal may be used as the first conductive layer 54. Such a metallic first conductive layer 54 should be thick enough to provide good conduction, and thin enough to permit good light transmission. Pure silver and pure gold may be used for such a light transmissive, conductive layer.

Adjacent the first conductive layer 54 is an EL layer 56 that emits light on electrical stimulation. The electroluminescent layer 56 may consist of a phosphor, light emissive polymer or similar material excitable to luminescence by a varying electric field. Different phosphors or emissive materials may be used to generate different colors. The electroluminescent layer 56 may also include binders and sealants to help preserve it. There exist numerous forms of such electroluminescent layer 56 materials including organic materials.

Organic electroluminescence materials generally exist in two forms. In one form the light emitting material may be a polymer type emitter, such as poly-phenylenevinylene (PPV). Alternatively, the light emitting material may be a molecular type emitter, such as an aluminoquinoline compound (Alq3). The emitter material may be coated or uncoated, and may or may not be included a binder to enhance adherence to the dielectric layer 58. Also, commercially mass produced electroluminescent materials based on manganese zinc sulfide phosphors may be used. In the case of inorganic phosphors, the emitter material may be coated or uncoated, and may or may not be included a binder to enhance adherence to the dielectric layer 58.

Electroluminescence occurs in anthracene crystals, and similar emissions occur in metal organic complexes of aluminum and beryllium known as Alq3 and Bebq2. The electroluminescence has been reported in a polymer, polyphenylene vinylene (PPV). Modifications of copolymerized PPV are known that are soluble in water or common solvents and as such can be easily processed by spin coating. Simplified processability and thermal stability are indeed key advantages of the polymeric EL materials over other EL materials including even organic (non polymeric) dye molecules.

Poly-phenylenevinylene (PPV), can be the backbone of a polymer based EL system. Many other polymer families have been successfully demonstrated to have electroluminescent (EL) behavior, such polythiophenes, oligo and alkyl thiophenes, paraphenylenes, phenylene vinylenes, polyfluorene and other organic complexes such as hydroxyquinoline Aluminum (Alq3) and Berillium bisquinoline complexes (Bebq).

Since the organic, and particularly the polymer systems, use incremental modifications in the conjugated luminophores to vary color, it is believed that an almost continuous spectrum of colors is possible. Since the organic EL materials are essentially electron injection devices, they operate at low driving voltages and the films making up the required EL sheet 50 layer can be comparatively thin (several hundred Angstroms). Some EL layers 56 are polymers soluble in common solvents, including in some cases water. These EL layer 56 materials can therefore be solution processed, are easy to handle and may require only a low conversion temperature of about 250°C to 300°C to cure. Most EL polymers of any consequence are soluable in their end form with no thermal conversion required at all. The fact that PPV requires thermal conversion is then somewhat out of the ordinary from what may be done with other EL materials. The EL sheet 50 may also be formed from molecular emitters such as Alq.

Low intensity applications such as sidemarkers, tail lamps and parking lamps can be successfully formed with only a few square inches of an EL sheet 50 material using existing organic light emitting materials. With luminance levels in the thousands of candelas per meter square, as is presently possible to meet most automobile specifications with generally the same exterior vehicle surface areas as used by conventional incandescent lamp and reflector assemblies. With expected increases in light intensities, even less material and less area would be needed for a functional lamp. For some demanding applications, such as supplemental high mounted (SHM) stop lamps and supplemental high mounted turn signals, these applications might require a slightly greater light emitting material area, but the area is not prohibitive, for example roughly 10 and 20 square inches for red and yellow lamps, respectively based on the use of a 2000 candela per meter squared EL sheet to satisfy SAE J186 photometric requirements. For the most demanding applications, such as stop lamps, considerable luminescent area would be needed, for example about 100 square inches with a 2000 candelas per meter square EL sheet to satisfy SAE J1398, but again with increasing intensity; a smaller area would be needed, and easily accommodated by one skilled in the art.

The materials for a typical light emitting organic device may consist of polymers, organic molecules or dyes of different chemical structure. They may be emitters of red, green, blue (such as CN-PPV, PPV and conjugation limited copolymers of PPV derivatives, such as poly[1,8-octanedioxy-2,6-dimethoxy-1,4-phenylene-1,2-ethenylene-1,4-phenylene-1,2-ethenylene-3.5-dimethoxy-1,4-phenylene], respectively) and other colors and may be combined in known ways to produce different colors including white. The emitting materials may also be broadband emitters producing a spectrum of light that approximates white. Furthermore the emitting materials may comprise a guest-host system, for example where a blue host polymer such as one from the poly-fluorene family is doped by an orange guest (such as MEH-PPV, see below) to ultimately emit white light to form a white emitting EL layer 56.

Numerous light emitting materials that can be layered on thin electrified sheets are now available, either from materials suppliers or from in-house manufacture. In general, proper color can be achieved by selecting an emitting material in or near the preferred region of interest. If the emission spectrum is not precisely in the target region, an absorptive filter may be used as an additional layer to trim the spectrum with only a small decrease in lumens. The emission layer may be configured in a variety of ways to achieve the desired emission. The emitter may be a homogenous layer, or the emitting material may be included in a high band gap host. There are many methods of converting the color of a phosphor. One can change the basic molecule, or the guest and host supporting system, or one may transfer higher frequency emissions to lower ones by radiative or nonradiative processes, followed by re-emission at the longer wavelength color. As an example, a red-orange light emitting device may be made using an emitting material of poly(2-methoxy, 5-(2'-ethyl-hexyloxy)-1,4 phenylene vinylene (MEH-PPV). MEH-PPV is a derivative of poly(phenylene vinylene) (PPV). The MEH-PPV material has color coordinates (CIE) of about x = 0.5700 and y = 0.3690. The SAE J578 JUN95 defined red zone for vehicle lighting is the interior of the region defined by y = 0.33; y = 0.98 - x and the outer boundaries of the visible region. This yields roughly a region defined by the color coordinates (0.6500, 0.3300; 0.6784, 0.3300; 0.7300, 0.2800; and 0.7093, 0.2705). Thus, although MEH-PPV has color coordinates just outside the SAE requirements for red lamps, the material can still be utilized by using any common absorptive filter to block the orange component of its emission (roughly below 580 nanometers), thus altering the emission to appear more red while only sacrificing a small fraction of its overall light output. An alternative approach would be to use MEH-PPV as a host material in such a way to effect energy transfer to a redder chromophore with more desirable CIE coordinates that has been mixed into the MEH-PPV. Another alternative would be to use an alternative red material without any host. New red materials are presently being developed. One such red producing material is cyano-PPV (CN-PPV) providing a red with coordinates of about x=0.68 ; y=0.31.

It should be understood that the EL layer 56 may actually be composed of different materials or layers to adjust the desired resulting color. Alternating pixels of two or more colors, or a merging of different color yielding materials may be used, or two thin over laying EL layers of differing colors may be used as if a single EL layer 56 to blend several colors and gain the desired result.

In the case of an inorganic EL layer 56, such as manganese doped zinc sulfide phosphor, between the EL layer 56, and the second conductive layer 60 may be an optional dielectric layer 58, such as barium titanate. The optional dielectric layer 58 helps establish an electric field across an electroluminescent layer 56, positioned along the dielectric layer 58.

Adjacent the EL layer 56 or the optional dielectric layer 58, as the case may be, is a second conductive layer 60. The second conductive layer 60 may be a metal, graphite, or similar material formed either in whole or in part as a complex of other materials on the dielectric layer 58. The second conductive layer 60 should provide sufficient conduction over the whole region where the electroluminescent layer 56 is to be lit up. The second conductive layer 60 is typically a metal of low workfunction, such as calcium, gold, silver, aluminum or magnesium that is typically opaque. In practice, it is often beneficial to insert a layer between the electroluminescent layer 56 and the second conductive layer 60 to aid in charge transport. An example of one such electron transport layer might be composed of 2-(4 -biphenylyl(-5-(4-tert-butyl-phenyl) 1,3,4-oxadiazole (PBD) in poly methyl methacrylate (PMMA) matrix. Coupled to the second conductive layer 60 is an second electrical lead 42. The second lead 42 may also include a copper mesh end or similar conductive means to provide a good contact between the second electrical lead 42, and the second conductive layer 60.

The whole EL sheet 50 may be further enclosed in an oxygen or moisture resistant, or other wise protective sheath 62 of a laminated clear plastic such as polyethylene terephthalate (PET) to protect the enclosed intermediate materials from water. This is particularly important for organic light emitting material devices.

Various methods for building up the EL sheet 50's layers may be used, including painting, spraying, "roll to roll" meniscus coating, evaporative or sputtered deposition. Other methods used for polymer film deposition use spin coating or doctor blade techniques. It is known that polymer, metal and oxide coatings may all be deposited in sequence in a single evaporating unit. The order of layer construction may of course be reversed. It is known that attaching ITO to an EL layer 56 can be more difficult that doing the reverse, and this fact effects the preferred order of assembly. .

The EL sheet 50 device may also contain elements such as getters, additives and antioxidants to improve UV and thermal resistance either as part of one of the components listed or as separate, discrete components within the system.

The total thickness of all layers functioning directly in electroluminescence (electrodes and organic layers) can range from less than one to a few microns. Hence, the total device thickness may depend on the selection of substrate and encapsulation materials, the latter of which could presumably also perform the function of a lens if necessary. A total EL sheet 50 thickness of only a few millimeters can be achieved. The preferred EL sheet 50 is a free floating sheet sized and shaped to conformally fit within the interior walls of the cavity 20.

The simple lamp 10 is assembled by first threading the lead wires 40, 42 through the back plate 30 via the through passage 38 for external connection. The shaped EL sheet 50 is then positioned adjacent to the back plate 30 and a sealant is extended along the face 34. The lens plate 12 is then positioned adjacent to the back plate 30 sealing the face 24 to face 34. In the preferred embodiment the defined cavity 20 is filled with an inert gas to help preserve the life of the light emissive material. The defined through passage 38 is then preferably sealed to keep water from entering the cavity 20 between the lens plate 12, the back plate 30, and the enclosed EL sheet 50. A sealant compound, such as RTV, may be used to seal the through passage 38 and the lead wires 40, 42 to prevent the inlet of water or water vapor.

The vehicle hull 48 may be formed to receive the lamp by impressing an indentation sized and shaped to conform with the lamp. The vehicle indentation has a depth approximately equal to the combined thickness of the lens plate 12 and the back plate 30. In the preferred embodiment, this total thickness is then about 3 to 20 millimeters. A thickness less than one inch is expected, and likely less than one centimeter. Alternatively a pliable mounting, such as a rubber sheet, cushion, seal or bracket may be used to interface between the vehicle and lamp. A hole(s), which may be quite small, may be formed through the hull 48 adjacent where the coupling features 44 and lead wires 40, 42 emerge from the back plate 30. The coupling features 44 and electrical leads are then threaded through the hole(s) and the lamp is glued, clipped or otherwise mechanically fastened in place in the indentation. On the interior side of the hull 48, lead wires 40, 42 are coupled to an appropriate power supply 124. Alternatively, the hull 48 may be formed with additional holes, and the back plate 30 may be formed with clips to extend into the additional holes in the vehicle hull 48 and thereby clip the lamp to the hull. Additional bracing; cushioning and sealing features may be added to retain the lamp securely in place. Such skill commonly exists in the field of vehicle lamp design.

Most EL sheet 50 light sources run on direct current, although AC driven devices have been demonstrated and may be used. The particular power requirement depends on the size and structure of the chosen EL sheet 50. In general, the power supplied to the light emitting material may be pulsed with a power on duty cycle of from 5 percent to 100 percent (continuous wave). Pulsed power has been found to reduce local heating in some EL materials. Each power cycle may range from a nanosecond to a fraction of a second. Alternating current sources may also be used. Many EL materials run well with just direct current. The typical voltage may range from several volts, (2 volts) to many times higher. Reverse bias pulses have been shown to improve the lifetime of some EL devices. In the case of inorganic electroluminescent light source material, the voltage may be on the order of thousands of volts (AC). A pulsed mode direct current voltage source provides from about 2 to about 100 volts from a 12 volt vehicle system. The power source may provide a specific duty cycle, for example 10%, or alternating current or continuous wave current.

Numerous variations of the lamp are possible. First, the EL sheet 50 may be made in different forms, with different materials.
In a one alternative, the EL sheet 50 may be produced as follows:
1) A glass or polymer substrate is cleaned in appropriate solvent such as methanol.
2) The cleaned substrate sheet is coated with a thin film of ITO by dip coating or sputtering. The ITO provides the second conductive layer and is deposited till a resistivity of 20 ohms per square millimeter is achieved.
3) A clean, bare copper lead wire is attached to an edge of the indium tin oxide (ITO) layer, for example by using a conductive adhesive or a silver conductive epoxy.
4) A 500 to 1000 microns thick layer of polyphenylene vinylene (PPV) precursor is formed coating the substrate in a one percent (1%) aqueous solution of PPV pre-polymer typically by spincoating processes.
5) The coated substrate is then dried to yield an even coating.
6) The coating and drying steps (4 and 5) may be repeated until the desired film thickness is achieved.
7) The pre-polymer coating is then converted to PPV, for example by heat treating the sample under vacuum at 170°C for 3 hours. The converted PPV provides the EL layer. The conversion step may not be required in alternative constructions where polymers such as MEH-PPV, CN-PPV are used. An electron transport layer is deposited on top of the PPV layer by either spincoating or dip coating with a ten percent (10%) by weight solution of PMMA/PBD (3:1 by weight) in chloroform.
8) The EL layer 50 surface, may be appropriately masked so that only the regions which are to be illuminated are exposed. The several uncoated regions may be electrically coupled by a 1.0 millimeter wide horizontal gap made in the mask.
9) A clean, bare copper lead wire is placed on top of the EL layer 50 (under an appropriate lamp region) so that a small length of the wire protrudes (when a mask if necessary is replaced) and so that a subsequent metal layer holds the wire firmly in place. In some cases the lead wires can be glued or soldered after an metalization operation as in step 10. Alternatively, an electrical contact can be made with spring loaded pins or clamps.
10) Calcium is evaporated in a vacuum chamber to form a layer of about 50 to 500 angstroms on top of the polymer layers and the copper lead wire. Directly on top of the calcium layer is evaporated about 1500 to 5000 angstroms of silver. Together, the calcium and silver layers provide the first conductive layer. The metal evaporations may be masked to provide an appropriate pattern.
11) Conductive silver epoxy may be applied to the aluminum or copper wire junction if the contact is weak.
12) The EL sheet 50 may be finished by applying a protective transparent epoxy coating to seal the edges and faces, or it may be sealed in an inert atmosphere, in an optically transparent, sealed polymer envelope designed for attachment on a vehicle. Epoxy may again be used to seal the space adjacent to the copper lead wire. Glass or other transparent nonporous materials may be also used in some cases to encapsulate the EL device.

The EL sheet 50 may also be structured to create light patterns in lamp 10. This may be done by laying out one or both of the conductive layers in a desired pattern. Alternatively, the EL layer 56 may be laid out in the desired pattern. The EL layer 56 may also include patterns of differing light emitting materials, to blend or contrast the respective induced colors. The EL layer 56 may also include regions of differing light emitting materials with corresponding conductive layers, so that a first region yields a first color, for example red; and a second region yields a second color, for example white; and a third region yields a third color, for example, amber. Each region is electrically isolated from adjoining areas when independent switching is required. Separate lead wires are of course needed for each region. Each of the differing color patterns may be powered by different control circuits, for example a brake light circuit, a turn signal circuit, and a back up light circuit. By this means one EL sheet 50 provides the red stop, amber turn, and white backup functions all in a single housing.

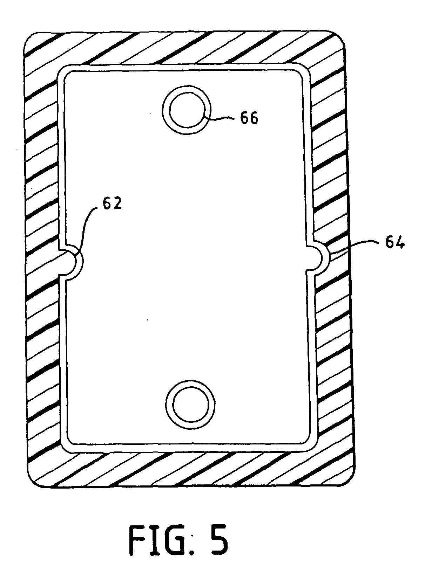

FIG. 5 shows a front view of a preferred alternative of the back plate and EL sheet 50. Alternatively, the housing may be formed with grooves, protrusions 62, recesses 64, posts 66, or similar positioning and retaining features to position and hold the EL sheet 50. The EL sheet 50 may be formed with corresponding edges, cut-outs or tabs, holes, or similar features to securely mate with the housing.

The formed cavity 20 is of such small size, that the free floating sheet 50 has little opportunity to shift or move within the cavity 20. However, it is understood that repeated mechanical jarring of the EL sheet 50 with respect to the interior housing walls may damage the edges or more of the EL sheet 50, so secure anchoring of the sheet 50 is preferred.

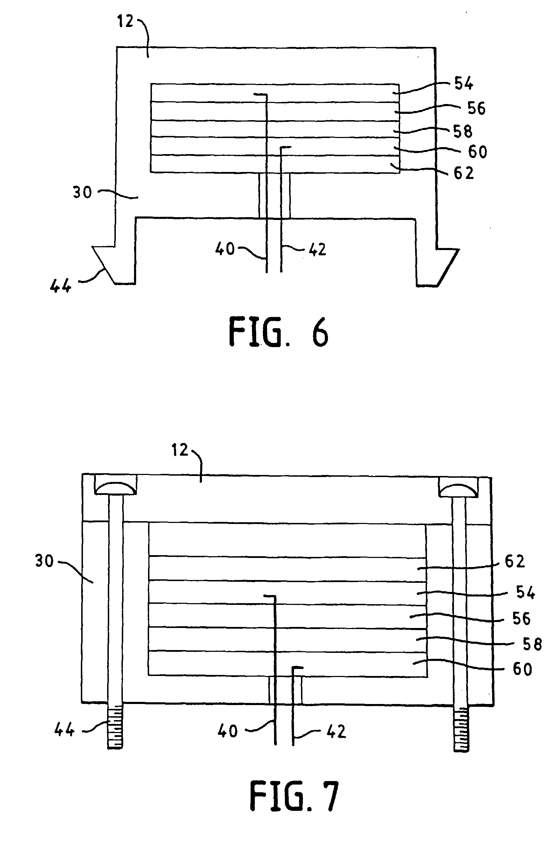

It is possible to use the lens plate 12 as the substrate, and then build the remaining layers of the EL sheet 50 directly on the lens plate 12 as the support layer 52. The EL sheet 50 may be preformed on the lens plate 12. A moisture proof layer 62 may be additionally used to complete the seal to the lens plate 12. When the EL layers are attached to a lens plate 12 or back plate 30 curved to conform to the expected vehicle, skill in accurately building up the various layers is required. Robotic spraying of the various materials is sufficiently developed to enable accurate spraying, and masking of such curved surfaces. FIG. 6 shows a cross sectional view of an alternative lens plate 12 and EL sheet 50 assembly built on the lens plate 12. Coupling features 44 are shown as molded latch arms. Although it is more difficult, the back plate 30 may be similarly used as a substrate, and the EL sheet 50 layers may be built up on it in reverse order with or without a top support layer.

FIG. 7 shows a cross sectional view of an alternative back plate 30 and EL sheet 50 assembly built on the back plate 30. To resist distortions, as a further alternative, the back plate 30 may be used as the substrate for building the EL sheet 50. The back plate 30 is then successively coated with the respective layers comprising the EL sheet 50, and the lead wires. Masking, or subsequent cleaning of the bonding seam to couple the back to the forward lens may be needed to keep the seam clear for a good bond. The coupling features 44 are shown as through screws. In a further, alternative, the EL sheet 50 may be formed with a glue, or adhesive type backing 68 to bond with the housing.

At least three techniques can be used to enhance the appearance of such vehicle lighting systems. The first uses the inherent appearance of a typical organic EL device. Since the organic emitting layer is producing the colored light, the lens plate 12 can be colorless (instead of red or yellow). Furthermore, since the organic EL layers 56 may be so thin (less than 1,000 angstroms), they can be nearly colorless as well in the off-mode. The dominating color factor determining the non-operating EL lamp 10 can be the color of the underlying second conductive layer, or the underlying vehicle hull color. The underlying second conductive layer 60 therefore can be aluminum, another metal, or a conducting polymer to modify the lamp 10 appearance. With, for example, an aluminum second conductive layer 60, the lamp can exhibit a muted appearance which can be a welcome styling improvement to the bright red and yellow plastic lenses. Alternatively the second conducting layer 60 may itself be transparent. The whole EL sheet 50 in the off mode is then be transparent. The underlying color of the vehicle paint then predominates as the apparent color of the lamp, thereby enabling what may be called a disappearing lamp on the surface of the vehicle. Admittedly, there are reflections and refractions from the various layers would make the lamp visible, but the general color would be that of the vehicle paint.

While virtually all colors have been shown using organic EL materials, the integration of any two differently color EL layers 56 into a single voltage-dependent device can be used to form a variety of complicated patterns. Two independently circuited devices may be used to drive the different colored regions contained within a single EL lamp. The multi-colored devices (red, amber, white and one matching the vehicle body) can be integrated within a single pixelated matrix where alternate pixels belong to one color group or the other. Alternatively, the different color devices can be integrated in a more continuous design. The greater portion of lamp area is reserved for the red, white or amber device and the luminance from the secondary color is enough to camouflage the rest of the lamp. The secondary color can be operated at lower luminance levels for greater lamp life. An inorganic EL material may substitute for the secondary color device since in many cases these materials have better lifetime performance. Inorganic EL materials do not generally exhibit the high luminance values or the color tunability that organic materials have shown. Alternatively, it has been shown that organic EL devices can be constructed with two or more different color emitters which can be selected for by applying different voltages. That is, one color emitter is preferentially excited at one voltage and another color emitter is excited at another voltage.

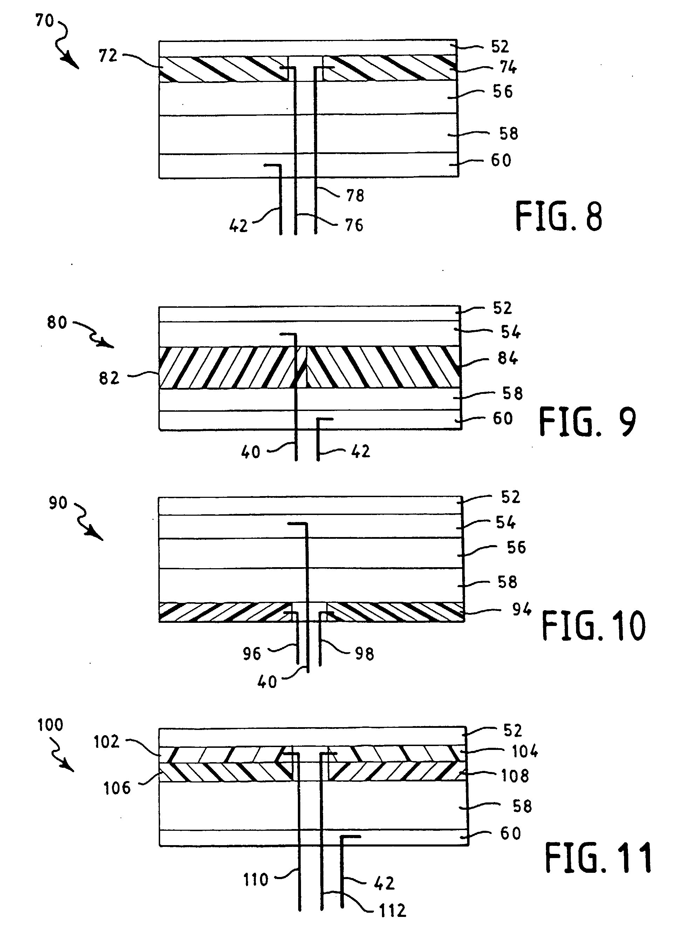

FIG. 8 shows a cross section of an alternative EL sheet 70 having two separated regions of illumination. The EL sheet 70 is formed with two first conductive layer sections 72, 74 (left and right sides). Here, the two first conductive layers 72, 74 form one strata in the assembly. Each of the two first conductive layers 72 and 74 is electrically connected to a separate lead 76, 78. In this way the left side and the right side of the EL sheet 70 may be separately powered for illumination.

FIG. 9 shows a cross section of an alternative EL sheet 80 having two separated color regions of illumination. The EL sheet 80 is formed with two differently colored EL layers 82, 84 (left and right sides). Here, the EL layers 82, 84 form one strata in the assembly. Both EL layers are illuminated at once

FIG. 10 shows a cross section of an alternative EL sheet 90 having two separated regions of illumination. The EL sheet 90 is formed with two second conductive layer sections 92, 94 (left and right sides). Here, the two first conductive layers 92, 94 form one strata in the assembly. Each of the two second conductive layers 92 and 94 is electrically connected to a separate lead 96, 98. In this way the left side and the right side of the EL sheet 90 may be separately powered for illumination.

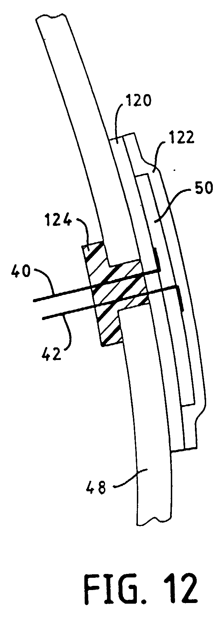

FIG. 11 shows a cross section of an alternative EL sheet 100 having two separated regions of illumination 102, 104 and two associated separated color regions 106, 108. The EL sheet 100 is formed with two first conductive layer sections 102, 104 (left and right sides). (It could be equally done with two second conduction regions as in FIG. 12.) Here, the two first conductive layers 102, 104 form one strata in the assembly. The EL sheet 100 is also formed with two differently colored EL layers 106, 108 (left and right sides). Again, the two EL layer regions 106, 108 form one strata in the assembly. Each of the two first conductive layers 102, 104 is electrically connected to a separate lead 110, 112. In this way the left side of the EL sheet 100 can be illuminated in one color at one time, while the right side of the EL sheet 100 can be separately illuminated in another color at same or at a different time as is the left side.

FIG. 12 shows a cross section of an alternative EL sheet decaled to the vehicle body. It should be understood that the EL device can be made so thin that it could be laminated directly on the vehicle surface like a decal, with no indentation required. An adhesive backing 120 that may be insulating, and a thin top covering 122 provide the shell to contain the EL sheet 50. A non-conductive plug 124 may be used to fill the through passage for the electrical leads 40, 42. Protection of the lamp by at least a protective lens is preferred.

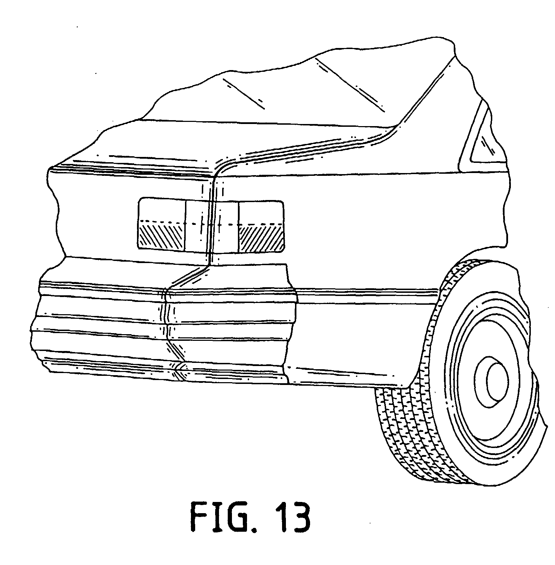

FIG. 13 shows a perspective view of an automobile corner with an electroluminescent vehicle lamp .

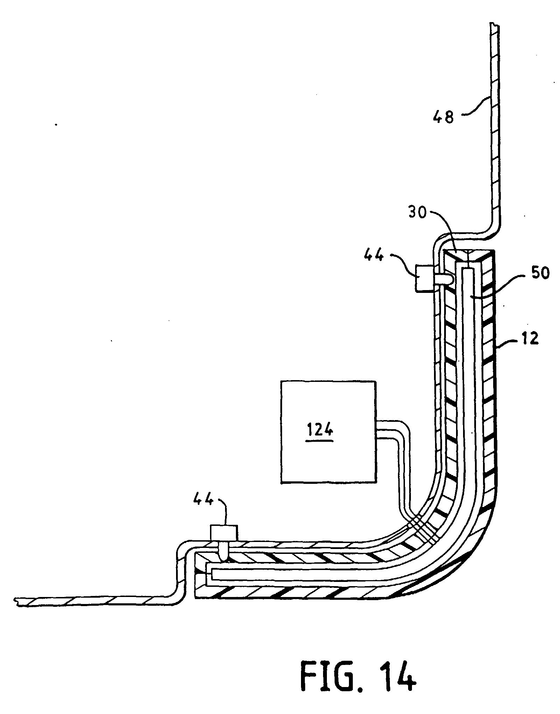

FIG. 14 shows a cross sectional view of an automobile corner with an electroluminescent vehicle lamp.

While there have been shown and described what are at present considered to be the preferred embodiments of the invention, it will be apparent to those skilled in the art that various changes and modifications can be made herein without departing from the scope of the invention defined by the appended claims.

## Claims

1. An electroluminescent exterior vehicle lamp comprising:
a) a light transmissive housing defining an enclosed, thin sheet like cavity therein; the housing having an exterior surface forming a portion of a exterior vehicle surface;
c) an electroluminescent sheet enclosed in the defined cavity;
d) a first electrical connector electrically coupled to the luminescent sheet, and sealed through the housing for electrical connection on the exterior of the housing, and
e) a second electrical connector electrically coupled to the luminescent sheet, and sealed through the housing for electrical connection on the exterior of the housing.

2. An electroluminescent vehicle lamp comprising:
a) a lens plate;
b) a back plate sealed to the lens plate forming a housing defining an enclosed, thin cavity therein;
c) an electroluminescent sheet enclosed in the defined cavity between the lens plate and the back plate;
d) a first electrical connector electrically coupled to the luminescent sheet, and sealed through the housing for electrical connection on the exterior of the housing, and
e) a second electrical connector electrically coupled to the luminescent sheet, and sealed through the housing for electrical connection on the exterior of the housing.

3. An electroluminescent vehicle lamp comprising:
a) a lens plate having a front side, a interior side, and a side wall;
b) a back plate, having a sealing face sealed to the lens plate forming an a housing therewith and defining an enclosed cavity therebetween;
c) an electroluminescent sheet located in the defined cavity between the lens plate and the back plate, the electroluminescent sheet having a first conductive layer, an intermediate electroluminescent layer including a material that emits light on electrical stimulation; and a light transmissive second conductive layer;
d) a first electrical connector electrically coupled to the first conductive layer; and
e) a second electrical connector electrically coupled to the second conductive layer.

4. The electroluminescent vehicle lamp in claim 3, wherein the back plate includes a wall portion defining a through passage, and the first electrical connector and the second electrical connector extend through the through passage of the back plate for electrical connection the electroluminescent sheet.

5. The electroluminescent vehicle lamp in claim 3, further including a support layer adjacent the first conductive layer.

6. The electroluminescent vehicle lamp in claim 3, further including a dielectric layer between the first conductive layer and the electroluminescent layer.

7. The electroluminescent vehicle lamp in claim 3, wherein the electroluminescent sheet includes a protective layer around the exterior of the electroluminescent sheet with at least a light transmissive window, the protective layer to limit environmental chemical interaction with the electroluminescent sheet.

8. The electroluminescent vehicle lamp in claim 7, wherein the protective layer is formed from PET.

9. The electroluminescent vehicle lamp in claim 7, wherein the protective layer is formed from clear plastic.

10. The electroluminescent vehicle lamp in claim 3, wherein the electroluminescent sheet includes an adhesive layer bonding the electroluminescent sheet to the housing.

11. The electroluminescent vehicle lamp in claim 3, wherein the lens plate includes a sealing surface extending around the circumference of the interior side.

12. The electroluminescent vehicle lamp in claim 3, wherein the lens plate includes lens elements formed on the interior surface.

13. The electroluminescent vehicle lamp in claim 3, wherein the lens plate includes a wall portion extending around the circumference of the interior side.

14. The electroluminescent vehicle lamp in claim 3, wherein the housing includes positioners to locate and hold the electroluminescent sheet in place.

15. The electroluminescent vehicle lamp in claim 1, wherein the housing includes coupling features to locate and hold the lamp with respect to the exterior of a vehicle.

16. The electroluminescent vehicle lamp in claim 2, wherein the back plate is formed from a plastic material sealed to the lens plate.

17. The electroluminescent vehicle lamp in claim 2, wherein the back plate includes coupling features coupled to a vehicle body to locate and hold the lamp with respect to the vehicle.

18. The electroluminescent vehicle lamp in claim 17, where in the coupling features are molded latches to couple with holes formed in the hull of the vehicle.

19. The electroluminescent vehicle lamp in claim 17, where in the coupling features are threaded fasteners to couple with the vehicle by means of holes formed in the hull of the vehicle.

20. The electroluminescent vehicle lamp in claim 3, wherein the electroluminescent sheet is an organic light emitting material.

21. The electroluminescent vehicle lamp in claim 3, wherein the support layer is a flexible resin material.

22. The electroluminescent vehicle lamp in claim 3, wherein the first conductive layer is graphite.

23. The electroluminescent vehicle lamp in claim 3, wherein the electroluminescent layer is an organic electroluminescent material deposited on a substrate.

24. The electroluminescent vehicle lamp in claim 23, wherein the substrate layer is rigid.

25. The electroluminescent vehicle lamp in claim 23, wherein the substrate layer is flexible.

26. The electroluminescent vehicle lamp in claim 3, wherein the light emitting material is a polymer type emitter material.

27. The electroluminescent vehicle lamp in claim 26, wherein the light emitting polymer type material is polyphenylene vinylene (PPV).

28. The electroluminescent vehicle lamp in claim 26, wherein the light emitting material is molecular type emitter material.

29. The electroluminescent vehicle lamp in claim 28, wherein the light emitting molecular type material is an aluminoquinoline compound (Alq3).

30. The electroluminescent vehicle lamp in claim 3, wherein the light transmissive second conductive layer is indium tin oxide.

31. The electroluminescent vehicle lamp in claim 3, wherein the light transmissive second conductive layer is thin layer of metal.

32. The electroluminescent vehicle lamp in claim 31, wherein the light transmissive second conductive metal layer is from 50 to 500 angstroms thick.

33. The electroluminescent vehicle lamp in claim 31, wherein the light transmissive second conductive metal layer is silver.

34. The electroluminescent vehicle lamp in claim 31, wherein the light transmissive second conductive metal layer is gold.

35. The electroluminescent vehicle lamp in claim 3, wherein the electroluminescent sheet has a first electroluminescent region and a second electroluminescent region.

36. The electroluminescent vehicle lamp in claim 35, further having a first conductive region associated with the first electroluminescent region, and a second conductive region associated with the second electroluminescent region.

37. The electroluminescent vehicle lamp in claim 35, wherein the first electroluminescent region has a first electroluminescent material that provides a first color, and the second electroluminescent region has a second electroluminescent material that provides a second color.

38. The electroluminescent vehicle lamp in claim 3, wherein the electroluminescent sheet has a first electroluminescent material operative at a first electrical power level providing a first color, and a second electroluminescent material operative at a second electrical power level higher than the first power level providing a second color.

39. The electroluminescent vehicle lamp in claim 38, wherein the first electroluminescent material is formed in a first pattern, and the second electroluminescent material formed in a separate pattern.

40. The electroluminescent vehicle lamp in claim 38, wherein the first electroluminescent region has a first conductive region, and the second electroluminescent region has a second conductive region wherein the first conductive region and the second conductive region can be operated separately.

41. The electroluminescent vehicle lamp in claim 35, wherein further first conductive region is formed by a pattern in a first electrically separate portion of the first conductive layer, and the second conductive region is formed by a pattern in a second electrically separate portion of the first conductive layer.

42. The electroluminescent vehicle lamp in claim 35, wherein further first conductive region is formed by a pattern in a first electrically separate portion of the second conductive layer, and the second conductive region is formed by a pattern in a second electrically separate portion of the second conductive layer.

43. The electroluminescent vehicle lamp in claim 35, wherein the electroluminescent sheet has a first electroluminescent region providing a first color and a second electroluminescent region providing a second color.

44. The electroluminescent vehicle lamp in claim 43, wherein further having a first conductive region associated with the first electroluminescent region, and a second conductive region associated with the second electroluminescent region, such that the first electroluminescent region, and the second electroluminescent region may be separately electrically operated.

45. The electroluminescent vehicle lamp in claim 43, wherein the first conductive region is formed by a pattern in a separate portion of the first conductive layer, and the second conductive region is formed by a pattern in a separate portion of the first conductive layer.

46. The electroluminescent vehicle lamp in claim 43, wherein the first conductive region is formed by a pattern in a separate portion of the second conductive layer, and the second conductive region is formed by a pattern in a separate portion of the second conductive layer.

47. The electroluminescent vehicle lamp in claim 1, wherein the electroluminescent layer, while in an electrically off state is substantially transparent to thereby transmit the color of an underlying layer through the electroluminescent layer to the exterior.

48. The electroluminescent vehicle lamp in claim 47, having a support layer being colored to a selected color and the support layer color is transmitted through the electroluminescent layer to the exterior during the electrically off period.

49. The electroluminescent vehicle lamp in claim 1, wherein the housing and the electroluminescent sheet while in an electrically off state are substantially transparent to thereby transmit the color of the underlying vehicle through the housing and the electroluminescent sheet to the exterior.

50. The lamp in claim 1, wherein the front side to back side thickness is less than or equal to 2,54 centimeter (1,0 inch).

51. The lamp in claim 1, wherein the front side to back side thickness is less than or equal to 1,0 centimeter.

52. A vehicle comprising:
a vehicle having an exterior hull with an indentation therein not exceeding one inch in depth, the indentation supporting an electroluminescent exterior vehicle lamp including
a) a housing having at least a light transmissive window, the housing defining an enclosed, thin sheet like cavity therein; the housing having an exterior surface forming with the adjacent exterior hull a portion of the exterior vehicle surface;
c) an electroluminescent sheet enclosed in the defined cavity;
d) a first electrical connector electrically coupled to the luminescent sheet, and sealed through the housing for electrical connection on the exterior of the housing, and
e) a second electrical connector electrically coupled to the luminescent sheet, and sealed through the housing for electrical connection on the exterior of the housing.
